# FASCICULE DE BREVET EUROPEEN

(11) **EP 2 200 851 B1**
(45) Date de publication et mention de la délivrance du brevet: **13.06.2012**
(21) Numéro de dépôt: 08843246.3
(22) Date de dépôt: 13.10.2008
(51) Int. Cl.: B60K 11/04, F01P 3/18

(54) **Face avant technique de véhicule automobile**
Kraftfahrzeug-Frontendmodul
Motor vehicle front end module

(30) Priorité: 25.10.2007 FR 0758558
(43) Date de publication de la demande: 30.06.2010
(73) Titulaire: Renault S.A.S., 92100 Boulogne-Billancourt (FR)
(72) Inventeur: BUI, Joseph, F-78130 Les Mureaux (FR); FLANDIN, Michael, F-28410 Broue (FR)
(74) Mandataire: Rougemont, Bernard
(86) Numéro de dépôt international: PCT/FR2008/051855
(87) Numéro de publication internationale: WO 2009/053640

(56) Documents cités:
- WO-A-03/026908
- FR-A- 2 779 221
- FR-A- 2 820 710
- JP-A- 9 032 553
- JP-A- 2006 036 039
- JP-U- 3 092 525
- US-A- 2 100 490
- US-A1- 2005 178 604

## Description

L'invention concerne une face avant technique de véhicule automobile comportant un élément de structure vertical et un échangeur thermique.

On connaît de nombreux exemples d'agencement de moyens complémentaires et de procédé de montage d'organe, tel qu'un échangeur thermique, sur une face avant technique de véhicule, laquelle face avant technique est destinée à être montée à une extrémité longitudinale avant de la structure de caisse du véhicule, généralement entre deux longerons opposés transversalement.

Le document FR-2.820.710 décrit un tel exemple d'agencement de moyens pour le montage d'un échangeur thermique sur un élément de structure vertical formant une face avant technique de véhicule automobile dans lequel l'échangeur thermique comporte des moyens pour son accrochage sur l'élément de structure, qui sont respectivement constitués par au moins une première paire de doigts et une seconde paire de doigts, l'élément de structure comportant au moins des premiers logements et des seconds logements respectivement aptes à coopérer avec les première et seconde paires de doigts.

Dans la majorité des véhicules actuels, la face avant technique comporte de nombreux points de fixation d'éléments de carrosserie du véhicule tels que le capot, les ailes, mais aussi d'organes destinés au refroidissement tels que l'échangeur thermique du moteur (usuellement appelé radiateur), le condenseur, le refroidisseur d'air de suralimentation, etc.

De surcroît, la face avant technique participe comme élément de structure à la tenue mécanique de l'ensemble de la caisse.

Pour chaque véhicule, le montage des organes destinés au refroidissement, tels que l'échangeur thermique du moteur, doit être aussi simple que possible et permettre de garantir une bonne tenue mécanique de l'ensemble, en particulier lorsque l'échangeur thermique est monté en porte à faux, c'est-à-dire longitudinalement en avant de l'élément de structure de la face avant technique.

Le but de la présente invention est de proposer un agencement de moyens pour le montage d'un échangeur thermique sur un élément de structure formant une face avant technique de véhicule qui assure un montage simple, ergonomique et rapide.

Dans ce but l'invention propose, selon un premier mode de réalisation, une face avant technique de véhicule automobile comportant un élément de structure vertical et un échangeur thermique, l'échangeur comportant des moyens pour son accrochage sur l'élément de structure, qui sont respectivement constitués par au moins une première paire de doigts et une seconde paire de doigts, et l'élément de structure comportant au moins des premiers logements et des seconds logements respectivement aptes à coopérer avec les première et seconde paires de doigts, caractérisée en ce que les premiers logements de l'élément de structure comporte chacun, verticalement vers le haut, une ouverture destinée à permettre l'introduction verticale dans chaque premier logement du doigt d'accrochage correspondant de la première paire, lors d'une première étape de montage de l'échangeur thermique, les doigts de la première paire de l'échangeur coopérant avec les premiers logements de l'élément de structure pour former une articulation par l'intermédiaire de laquelle l'échangeur thermique est apte à pivoter autour d'un axe transversal de pivotement pour, lors d'une deuxième étape de montage, être amené dans une position finale verticale dans laquelle chacun des doigts de la seconde paire est introduit longitudinalement de l'avant vers l'arrière dans le second logement associé de l'élément de structure muni à cet effet d'une ouverture longitudinale avant, et en ce que, lors d'une troisième étape de montage, l'échangeur thermique est immobilisé, au moins longitudinalement, par rapport à l'élément de structure par l'intermédiaire de moyens de verrouillage qui sont aptes à bloquer au moins l'un des doigts de la seconde paire dans le logement associé, de manière à verrouiller l'échangeur thermique dans la position finale verticale correspondant à sa position d'utilisation.

Grâce à l'invention, on assure un montage simple, ergonomique et rapide d'un organe, tel que l'échangeur thermique du moteur, tout en mettant en oeuvre des moyens de verrouillage susceptibles d'être standardisés pour être utilisés sur différentes faces avant de véhicule.

Selon d'autres caractéristiques de l'invention, prises isolément ou en combinaison :
- en position finale d'utilisation, l'échangeur thermique est suspendu par les doigts, dits supérieurs, de la première paire qui coopèrent avec les premiers logements associés, dits supérieurs, et est immobilisé verticalement par les doigts, dits inférieurs, de la seconde paire introduits dans les seconds logements associés, dits inférieurs ;
- les moyens de verrouillage sont constitués par au moins une bride qui est apte à fermer l'ouverture d'au moins un des seconds logements inférieurs pour immobiliser longitudinalement le doigt inférieur associé dans le second logement inférieur et verrouiller l'échangeur thermique en position finale d'utilisation ;
- en position finale d'utilisation, l'échangeur thermique est suspendu par les doigts, dits inférieurs, de la seconde paire qui coopèrent avec les seconds logements associés, dits inférieurs, et est immobilisé verticalement par les doigts, dits supérieurs, de la première paire introduits dans les premiers logements associés, dits supérieurs ;
- les moyens de verrouillage sont constitués par au moins une bride qui est apte à fermer l'ouverture d'au moins un des premiers logements inférieurs pour immobiliser longitudinalement le doigt supérieur associé dans le premier logement et verrouiller l'échangeur thermique en position finale d'utilisation ;
- la bride est montée sur l'élément de structure par une liaison articulée agencée à une première de ses extrémités ;
- la bride comporte au moins une première extrémité étagée qui est formée par une partie d'extrémité plane se raccordant par une portion coudée à une partie centrale et au moins la partie d'extrémité plane est apte à être introduite, longitudinalement de l'avant vers l'arrière, dans une fente complémentaire de l'élément de structure de manière que au moins la portion coudée coopère avec la fente pour former une liaison articulée ;
- la bride est apte à pivoter autour d'un axe transversal entre au moins une position initiale horizontale, qu'elle occupe après l'engagement de sa première extrémité, dite d'articulation, à travers la fente, et une position finale de verrouillage dans laquelle la bride s'étendant globalement verticalement est apte à empêcher le doigt de sortir hors du logement par l'ouverture longitudinale avant ;
- au moins une deuxième extrémité de la bride est apte à être fixée solidairement à l'élément de structure de manière à immobiliser la bride dans sa position finale de verrouillage ;
- la deuxième extrémité, dite de fixation, de la bride est fixée sur l'élément de structure par vissage par l'intermédiaire d'au moins une vis de fixation ;
- la première extrémité étagée d'articulation de la bride est apte à coopérer avec la fente de manière que la bride soit temporairement immobilisée dans une position d'attente dans laquelle la bride s'étend orthogonalement à l'élément de structure et à l'échangeur thermique, avant d'être, au cours de la troisième étape de montage, rabattue vers sa position finale de verrouillage dans laquelle la bride s'étendant globalement verticalement ferme le logement associé comprenant le doigt ;
- les moyens de verrouillage, tel qu'au moins une bride, sont prémontés sur l'élément de structure de manière imperdable.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective qui représente un exemple de réalisation d'un échangeur thermique avant son montage sur un élément de structure associé formant une face avant technique de véhicule ;
- les figures 2 à 5 sont des vues de côté qui représentent schématiquement l'échangeur thermique et l'élément de structure et qui illustrent les première et deuxième étapes de montage pour l'accrochage de l'échangeur sur l'élément de structure ;
- les figures 6 à 8 sont des vues en perspective qui représentent en détails les moyens de verrouillage et la troisième étape de montage au cours de laquelle l'échangeur est verrouillé en position finale verticale correspondant à sa position d'utilisation.

Dans la description et les revendications, on utilisera à titre non limitatif les expressions telles que "supérieur" et "inférieur", "avant" et "arrière", et les orientations "longitudinale", "verticale" et "latérale" en référence au trièdre (L, V, T) représenté sur les figures et aux définitions données dans la description.

De plus, les éléments identiques, similaires ou analogues seront désignés par les mêmes chiffres de référence.

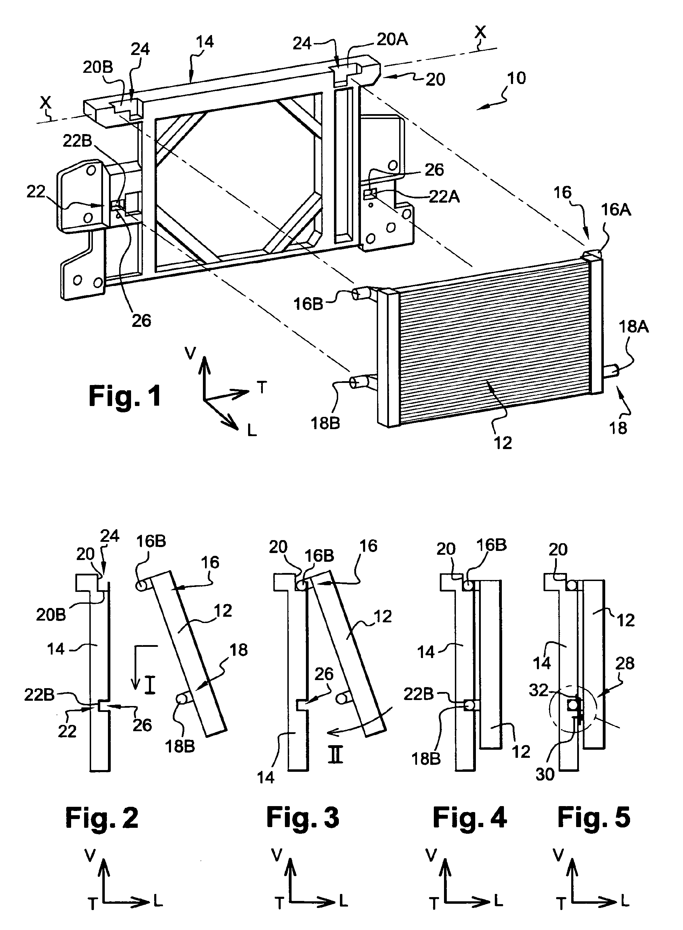

On a représenté à la figure 1, le premier mode de réalisation selon l'invention d'un agencement 10 pour le montage d'un échangeur thermique 12 qui est plus particulièrement destiné à être monté sur un élément de structure vertical 14.

Avantageusement, l'élément de structure vertical 14 est une face avant technique de véhicule automobile, longitudinalement en avant de laquelle est représenté sur la figure 1 l'échangeur thermique 12.

Conformément à l'invention, l'échangeur thermique 12 comporte des moyens pour son accrochage sur la partie avant de l'élément de structure 14.

Les moyens d'accrochage de l'échangeur thermique 12 sont respectivement constitués par au moins une première paire 16 de doigts et une seconde paire 18 de doigts, lesdits doigts de chaque paire s'étendant de préférence transversalement en saillie de part et d'autre de l'échangeur 12.

La première paire 16 de doigts est agencée verticalement dans la partie supérieure de l'échangeur 12 au dessus de la seconde paire 18 de doigts, chaque paire de doigts supérieurs 16 et inférieurs 18 comportant respectivement un doigt qui s'étend transversalement à droite et un doigt qui s'étend transversalement à gauche.

Ainsi, la première paire 16 de doigts, dits supérieurs, comporte au moins un doigt supérieur droit 16A et un doigt supérieur gauche 16B tandis que la deuxième paire 18 de doigts, dits inférieurs, comporte au moins un doigt inférieur droit 18A et un doigt inférieur gauche 18B.

L'élément de structure 14 comporte au moins des premiers logements 20, dits supérieurs, et des seconds logements 22, dits inférieurs, respectivement aptes à coopérer avec les première et seconde paires 16, 18 de doigts d'accrochage pour le montage de l'échangeur thermique 12.

Les premiers logements supérieurs 20 de l'élément de structure 14 sont constitués par un logement supérieur droit 20A et un logement supérieur gauche 20B, chacun des logements 20A, 20B étant ouvert verticalement vers le haut par l'intermédiaire d'une ouverture 24.

Chaque ouverture 24 des premiers logements supérieurs 20A, 20B est destinée à permettre l'introduction, ici suivant une direction globalement verticale, du doigt supérieur d'accrochage 16A, 16B de la première paire 16 dans chaque logement 20A, 20B qui lui est associé et cela lors d'une première étape de montage de l'échangeur thermique 12.

Lors de cette première étape de montage de l'échangeur thermique 12 qui est illustrée par la flèche 1 sur la figure 2, l'échangeur 12 est amené dans une position initiale inclinée par rapport à la verticale et les doigts supérieurs 16A et 16B de la première paire 16 sont engagés dans les premiers logements supérieurs 20A et 20B.

L'introduction des doigts supérieurs 16A, 16B dans les logements 20A, 20B s'effectue donc globalement verticalement de haut en bas, le poids de l'échangeur 12 facilitant le passage des doigts 16A, 16B à travers les ouvertures verticales supérieures 24.

A l'issue de cette première étape de montage et tel qu'illustré par la figure 3, l'échangeur thermique 12 occupe alors temporairement une position intermédiaire inclinée dans laquelle les doigts supérieurs 16A, 16B d'accrochage de l'échangeur 12 coopèrent avec une partie des premiers logements 20A, 20B de l'élément de structure 14 pour former une articulation.

Par l'intermédiaire de l'articulation, l'échangeur thermique 12 est apte à pivoter autour d'un axe transversal X de pivotement pour, lors d'une deuxième étape de montage, être amené suivant la flèche Il depuis la position intermédiaire inclinée illustrée par la figure 3 jusqu'à une position finale verticale illustrée par la figure 4.

Pour atteindre la position finale verticale illustrée à la figure 4, chacun des doigts inférieurs 18A, 18B de la seconde paire 18 est introduit longitudinalement de l'avant vers l'arrière dans le second logement inférieur 22A, 22B associé de l'élément de structure 14, chaque logement 22 étant muni à cet effet d'une ouverture longitudinale avant 26.

En position finale d'utilisation, l'échangeur thermique 12 est de préférence suspendu par les doigts supérieurs 16A, 16B d'accrochage de la première paire 16 qui coopèrent avec les premiers logements supérieurs 20A, 20B associés et l'échangeur thermique 12 est alors immobilisé verticalement par les doigts inférieurs 18A, 18B de la seconde paire 18 qui coopèrent avec les seconds logements inférieurs 22A, 22B associés.

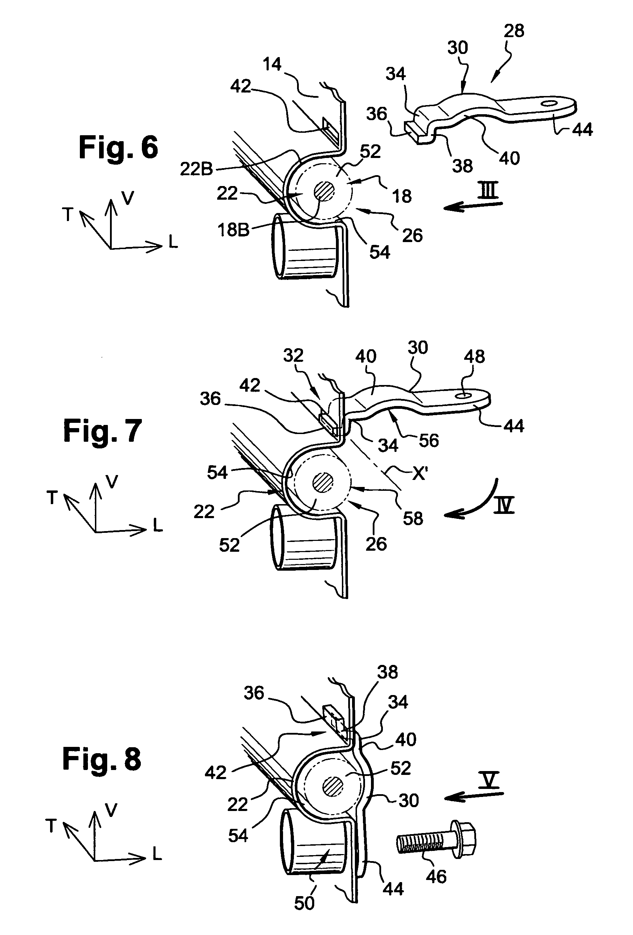

Lors d'une troisième étape de montage plus particulièrement illustrée aux figures 6 à 8, l'échangeur thermique 12 est immobilisé, au moins longitudinalement, par rapport à l'élément de structure 14 par l'intermédiaire de moyens de verrouillage 28 qui sont aptes à bloquer au moins l'un des doigts, ici les doigts inférieurs 18A, 18B de la seconde paire 18, dans au moins un logement associé, ici les seconds logements 22A, 22B, de manière à verrouiller l'échangeur thermique 12 dans ladite position finale verticale correspondant à sa position d'utilisation représentée à la figure 5.

Selon un mode de réalisation préféré, les moyens de verrouillage 28 sont constitués par au moins une bride 30 qui est apte à fermer l'ouverture 26 d'au moins l'un des seconds logements inférieurs 22A, 22B pour immobiliser longitudinalement l'un des doigts inférieurs 18A, 18B associés dans le second logement 22A, 22B et verrouiller ainsi l'échangeur thermique 12 en position finale d'utilisation.

Avantageusement, la bride 30 est montée sur l'élément de structure 14 par une liaison articulée 32 agencée à une première de ses extrémités, par exemple ici une première extrémité 34 supérieure.

De préférence, la bride 30 comporte au moins une première extrémité 34 étagée qui est formée par une partie d'extrémité plane 36 se raccordant par une portion coudée 38 à une partie centrale 40 et au moins la partie d'extrémité plane 36 est apte à être introduite, longitudinalement de l'avant vers l'arrière suivant la flèche III représentée à la figure 6, dans une fente horizontale 42 complémentaire de l'élément de structure 14 de manière que au moins la portion coudée 38 de la bride 30 coopère avec la fente 42 pour former la liaison articulée 32.

De préférence, une fente horizontale 42 est agencée verticalement au dessus de chaque logement inférieur 22A et 22B.

Avantageusement, la bride 30 est apte à pivoter suivant la flèche IV autour d'un axe transversal X' entre au moins une position initiale horizontale telle qu'illustrée à la figure 7, qu'elle occupe après l'engagement de sa première extrémité 34, dite d'articulation, à travers la fente 42, et une position finale de verrouillage dans laquelle la bride 30, qui s'étend globalement verticalement, est apte à empêcher le doigt inférieur 18 de sortir hors du second logement 22 par l'ouverture longitudinale avant 26.

De préférence, au moins une deuxième extrémité 44 de la bride 30, longitudinalement opposée à la première extrémité d'articulation 34, est apte à être fixée solidairement à l'élément de structure 14 de manière à immobiliser la bride 30 dans sa position finale de verrouillage illustrée à la figure 8.

Avantageusement, la deuxième extrémité 44, dite de fixation, de la bride 30 est fixée sur l'élément de structure 14 par vissage par l'intermédiaire d'au moins une vis de fixation 46.

A cet effet, l'extrémité de fixation 44 de la bride 30 de verrouillage comporte un trou calibré 48 de passage traversé par la tige de la vis 46 qui est reçue dans un trou taraudé 50 complémentaire de l'élément de structure 14, coaxial audit trou de passage 48.

La vis 46 est introduite longitudinalement de l'avant vers l'arrière suivant la flèche V représentée sur la figure 8 à travers les trous 48 et 50 de manière que, en position serrée, la tête de la vis 46 coopère avec une partie de la face avant de l'extrémité de fixation 44 de la bride de verrouillage 30 adjacente au trou de passage 48.

Avantageusement, la fixation de la bride 30 par vissage est un mode de fixation réversible autorisant une intervention ultérieure sur l'échangeur thermique 12 dont le démontage est susceptible d'être obtenu en réalisant dans l'ordre inverse les étapes de montage, c'est-à-dire notamment en commençant par un desserrage de la vis 46 pour opérer le démontage de la bride 30 et déverrouiller l'échangeur thermique 12.

Avantageusement, la première extrémité étagée 34 d'articulation de la bride 30 est apte à coopérer avec la fente 42 de manière que la bride 30 soit temporairement immobilisée dans une position dite d'attente.

Dans cette position d'attente, la bride 30 s'étend orthogonalement à l'élément de structure 14 et à l'échangeur thermique 12.

De préférence, la bride 30 est rapportée dans une telle position d'attente après la mise en oeuvre de la deuxième étape de montage pour éviter le cas échéant toute interférence, c'est-à-dire après que les doigts 18A, 18B aient été introduits dans les logements 22A, 22B suivant la flèche II représentée à la figure 3.

Au cours de la troisième étape de montage, la bride 30 est rabattue de la position d'attente vers sa position finale de verrouillage dans laquelle la bride 30 qui s'étend globalement verticalement ferme alors le logement 22 associé comprenant le doigt 18.

De préférence, les moyens de verrouillage 28, tel qu'au moins une bride 30, sont pré-montés sur l'élément de structure 14 avantageusement de manière imperdable.

Avantageusement, les moyens de verrouillage 28 comportent deux brides 30, une première bride associée au doigt inférieur droit 18A reçu dans le logement 22A et une deuxième bride associée à l'autre doigt inférieur 18B reçu dans le logement 22B.

De préférence, chaque doigt 16 et/ou 18 est muni d'un manchon cylindrique 52 apte à assurer une fonction de filtration des vibrations et d'amortissement et à l'intérieur duquel pénètre transversalement le doigt 16, 18, chaque manchon 52 coopérant en position finale avec au moins une partie de la paroi interne 54 délimitant le logement 20 et/ou 22 associé.

De préférence, la partie centrale 40 de la bride 30 comporte un profil intérieur concave 56 destiné à coopérer avec une partie de la surface cylindrique externe 58 du manchon 52 reçu dans le logement inférieur 22 associé.

Comme illustré par les figures 2 à 8, le procédé de montage de l'échangeur thermique 12 sur l'élément de structure 14 comporte successivement :
- une première étape de montage au cours de laquelle l'échangeur 12 est amené dans une position initiale inclinée de manière à procéder à l'accrochage d'au moins une partie de l'échangeur thermique 12 sur l'élément de structure 14 ;
- une deuxième étape de montage au cours de laquelle l'échangeur thermique 12 ainsi accroché dans une position intermédiaire inclinée est apte à être déplacé par rotation vers une position finale verticale ; et
- une troisième étape de montage au cours de laquelle on procède au verrouillage de l'échangeur thermique 12 sur l'élément de structure 14 par des moyens de verrouillage.

Bien entendu, les opérations successives du procédé de montage représentées sur les figures (et illustrées par les flèches référencées avec des chiffres romains pour les principales étapes) ne sont pas limitatives, la troisième étape dépendant tout particulièrement des moyens de verrouillage 28 mis en oeuvre.

Ainsi, selon un deuxième mode de réalisation (non représenté), le pivot permettant la rotation de l'échangeur 12 entre ses positions intermédiaire inclinée et finale verticale pourrait de manière similaire être obtenu par coopération des doigts inférieurs 18A, 18B avec des logements 22A, 22B complémentaires de l'élément de structure 14 et non des doigts supérieurs 16A, 16B.

En effet, on pourrait de manière analogue inverser la fonction associée à chaque paire 16, 18 de doigts de manière à introduire les doigts inférieurs 18A, 18B pour former l'articulation de pivotement dans la partie inférieure de l'échangeur thermique 12 et à procéder au basculement d'avant vers l'arrière de l'échangeur 12 en direction de l'élément de structure 14 situé en arrière pour introduire, après les doigts inférieurs 18 dans les logements 22, les doigts supérieurs 16 dans les logements 20 associés dans lesquels les moyens de verrouillage 28, tels qu'une bride 30, sont susceptibles de les immobiliser longitudinalement.

Selon une variante non représentée, le verrouillage de l'échangeur 12 est obtenu automatiquement par coopération de formes lors du montage, c'est-à-dire sans recourir à la mise en oeuvre d'organes de fixation tels que les vis.

Une telle variante de verrouillage automatique est par exemple susceptible d'être obtenu au moyen d'un montage du type « à baïonnette » ou un autre montage analogue dans lequel les doigts 16, 18 seraient tout d'abord introduits simultanément dans les logements 20, 22 associés par des ouvertures longitudinales avant puis s'engageraient verticalement vers le bas dans une autre partie de logements conformés en "L".

Dans une telle variante, les doigts 16, 18 seraient avantageusement immobilisés selon la direction longitudinale et des moyens de verrouillage 28 devraient de préférence être prévus pour verrouiller les doigts en position et éviter tout déplacement des doigts selon la direction verticale afin d'éviter qu'ils ne se dégagent des logements 20, 22.

Bien entendu, la bride de verrouillage 30 qui vient d'être décrite ne constitue qu'un exemple de réalisation préféré et non limitatif des moyens de verrouillage 28 de l'échangeur thermique 12 sur l'élément de structure 14 formant la face avant technique du véhicule.

Ainsi, dans la variante précitée, les moyens de verrouillage 28 aptes à éviter tout déplacement des doigts selon la direction verticale afin d'éviter qu'ils ne se dégagent des logements 20, 22 sont par exemple constitués par une goupille.

Selon une autre variante non représentée, les moyens de verrouillage 28 sont constitués par un loquet qui, de préférence monté solidaire de l'élément de structure 14, est apte à coulisser entre une position extrême d'ouverture dans laquelle les doigts 18 sont susceptibles d'être introduits dans les logements inférieurs 22, et une position extrême de verrouillage dans laquelle les doigts 18 (et les manchons 52) sont verrouillés dans les logements inférieurs 22, notamment selon la direction longitudinale.

Selon encore une autre variante non représentée, les moyens de verrouillage 28 sont constitués par au moins une bride de verrouillage qui est, à l'une de ses extrémités, montée pivotante autour d'un axe longitudinal de manière à pouvoir être déplacée en rotation autour de cet axe longitudinal entre :
- une position d'attente dans laquelle un doigt d'accrochage tel qu'un doigt inférieur 18A, 18B, est libre d'être introduit longitudinalement dans le logement 22 associé, et
- une position finale de verrouillage dans laquelle la bride 30 immobilise longitudinalement le doigt 18 dans le logement 22 afin de verrouiller en position finale l'échangeur thermique 12.

Avantageusement, une telle bride de verrouillage comporte par exemple à une extrémité un trou destiné à être traversé par le pivot, par exemple formé par une vis, qui lorsqu'elle est serrée assure le maintien de la bride de verrouillage en position d'attente pour laquelle l'ouverture du logement est libre d'accès.

La bride de verrouillage est alors avantageusement montée de manière imperdable et solidaire de l'élément de structure 14.

Pour procéder au verrouillage, après que le doigt a été introduit dans le logement, on procède par exemple au desserrage de la vis afin d'autoriser le pivotement de la bride depuis la position d'attente jusqu'à la position finale de verrouillage dans laquelle l'extrémité de la bride opposée au pivot coopère avec un élément de retenue de la bride selon au moins la direction longitudinale, l'immobilisation totale de la bride pouvant alors être obtenue par un nouveau vissage ou par coopération de formes de l'autre extrémité avec l'élément de retenue.

Selon une variante non représentée, seuls les doigts de la paire de doigts formant l'articulation suivant l'axe X sont d'orientation transversale, les doigts de l'autre paire destinés à être verrouillés s'étendant par exemple longitudinalement vers l'arrière et non transversalement de part et d'autre de l'échangeur comme dans le mode de réalisation représenté aux figures.

Dans une telle variante, le verrouillage de l'échangeur thermique 12 en position d'utilisation est par exemple réalisé sans bride de la manière décrite ci-après.

Les doigts inférieurs de l'échangeur 12 comportent une extrémité longitudinale avant qui est filetée et qui, après que chaque doigt a été introduit dans un logement inférieur complémentaire comportant une ouverture longitudinale adaptée, est susceptible d'être immobilisé au moyen d'un écrou.

L'écrou est par exemple monté par l'arrière et il coopère avec une partie du logement ou de l'élément de structure pour immobiliser le doigt selon la direction longitudinale, l'immobilisation selon la direction verticale étant avantageusement obtenue comme précédemment par coopération de formes avec le logement.

L'agencement 10 des moyens pour le montage de l'échangeur thermique 12 sur l'élément de structure 14 vertical, formant une face avant technique de véhicule automobile, est caractérisé par le fait que l'échangeur thermique 12 comporte des moyens pour son montage sur l'élément de structure 14 qui sont constitués par les doigts 16, 18 et par le fait que l'élément de structure 14 comporte des logements 20, 22 respectivement aptes à coopérer avec les doigts 16, 18 et enfin par le fait qu'il comporte des moyens de verrouillage 28 aptes à immobiliser au moins longitudinalement l'échangeur thermique 12 pour le verrouiller dans la position finale verticale correspondant à sa position d'utilisation.

La présente invention trouve avantageusement application dans le domaine de l'automobile et propose une solution technique simple et efficace pour réaliser l'accrochage d'un organe tel que l'échangeur thermique sur un élément de structure associé apte à constituer la face avant du véhicule.

## Revendications

1. Face avant technique de véhicule automobile comportant un élément de structure (14) vertical et un échangeur thermique (12), l'échangeur thermique (12) comportant des moyens pour son accrochage sur l'élément de structure (14), qui sont respectivement constitués par au moins une première paire (16) de doigts (16A, 16B) et une seconde paire (18) de doigts (18A, 18B), et l'élément de structure (14) comportant au moins des premiers logements (20, 20A, 20B) et des seconds logements (22, 22A, 22B) respectivement aptes à coopérer avec les première et seconde paires (16, 18) de doigts (16A, 16B, 18A, 18B),
**caractérisée en ce que** les premiers logements (20A, 20B) de l'élément de structure (14) comporte chacun, verticalement vers le haut, une ouverture (24) destinée à permettre l'introduction verticale dans chaque premier logement (20) du doigt (16A, 16B) d'accrochage correspondant de la première paire (16), les doigts (16A, 16B) de la première paire (16) de l'échangeur (12) coopérant avec les premiers logements (20A, 20B) de l'élément de structure (14) pour former une articulation par l'intermédiaire de laquelle l'échangeur thermique (12) est apte à pivoter autour d'un axe transversal (X) de pivotement pour être amené dans une position finale verticale dans laquelle chacun des doigts (18A, 18B) de la seconde paire (18) est introduit longitudinalement de l'avant vers l'arrière dans le second logement (22A, 22B) associé de l'élément de structure (14) muni à cet effet d'une ouverture longitudinale avant (26),
et **en ce que** l'échangeur thermique (12) est immobilisé, au moins longitudinalement, par rapport à l'élément de structure (14) par l'intermédiaire de moyens de verrouillage (28) qui sont aptes à bloquer au moins l'un des doigts (18A, 18B) de la seconde paire (18) dans le logement (22A, 22B) associé, de manière à verrouiller l'échangeur thermique (12) dans la position finale verticale correspondant à sa position d'utilisation.

2. Face avant technique selon la revendication 1, **caractérisée en ce que**, en position finale d'utilisation, l'échangeur thermique (12) est suspendu par les doigts (16A, 16B) de la première paire (16) qui coopèrent avec les premiers logements (20A, 20B) associés et est immobilisé verticalement par les doigts (18A, 18B) de la seconde paire (18) introduits dans les seconds logements (22A, 22B) associés.

3. Face avant technique selon la revendication 2, **caractérisée en ce que** les moyens de verrouillage (28) sont constitués par au moins une bride (30) qui est apte à fermer l'ouverture (26) d'au moins un des seconds logements (22A, 22B) pour immobiliser longitudinalement le doigt (18A, 18B) associé dans le second logement (22A, 22B) et verrouiller l'échangeur thermique (12) en position finale d'utilisation.

4. Face avant technique selon la revendication 3, **caractérisée en ce que** la bride (30) est montée sur l'élément de structure (14) par une liaison articulée (32) agencée à une première (34) de ses extrémités.

5. Face avant technique selon la revendication 3 ou 4, **caractérisée en ce que** la bride (30) comporte au moins une première extrémité (34) étagée qui est formée par une partie d'extrémité plane (36) se raccordant par une portion coudée (38) à une partie centrale (40) et **en ce que** au moins la partie d'extrémité plane (36) est apte à être introduite, longitudinalement de l'avant vers l'arrière, dans une fente (42) complémentaire de l'élément de structure (14) de manière que au moins la portion coudée (38) coopère avec la fente (42) pour former une liaison articulée (32).

6. Face avant technique selon la revendication 5, **caractérisée en ce que** la bride (30) est apte à pivoter autour d'un axe transversal (X') entre au moins une position initiale horizontale, qu'elle occupe après l'engagement de sa première extrémité (34), dite d'articulation, à travers la fente (42), et une position finale de verrouillage dans laquelle la bride (30) s'étendant globalement verticalement est apte à empêcher le doigt (16A, 16B ; 18A, 18B) de sortir hors du logement (20A, 20B ; 22A, 22B) par l'ouverture longitudinale avant (26).

7. Face avant technique selon la revendication 6, **caractérisée en ce que** au moins une deuxième extrémité (44) de la bride (30) est apte à être fixée solidairement à l'élément de structure (14) de manière à immobiliser la bride (30) dans sa position finale de verrouillage.

8. Face avant technique selon la revendication 7, **caractérisée en ce que** la deuxième extrémité (44), dite de fixation, de la bride (30) est fixée sur l'élément de structure (14) par vissage par l'intermédiaire d'au moins une vis de fixation (46).

9. Face avant technique selon l'une des revendications 7 ou 8, **caractérisée en ce que** la première extrémité (34) étagée d'articulation de la bride (30) est apte à coopérer avec la fente (42) de manière que la bride (30) soit temporairement immobilisée dans une position d'attente dans laquelle la bride (30) s'étend orthogonalement à l'élément de structure (14) et à l'échangeur thermique (12), et ce avant d'être rabattue vers sa position finale de verrouillage dans laquelle la bride (30) s'étendant globalement verticalement ferme le logement (20A, 20B ; 22A, 22B) associé comprenant le doigt (16A, 16B ; 18A, 18B).

10. Face avant technique selon l'une quelconque des revendications précédentes, **caractérisée en ce que** les moyens de verrouillage (28), tel qu'au moins une bride (30), sont prémontés sur l'élément de structure (14) de manière imperdable.

## Claims

1. Motor vehicle front end module comprising a vertical structural element (14) and a heat exchanger (12), the heat exchanger (12) including means for its attachment to the structural element (14), which respectively consist of at least one first pair (16) of fingers (16A, 16B) and one second pair (18) of fingers (18A, 18B), and the structural element (14) including at least first recesses (20, 20A, 20B) and second recesses (22, 22A, 22B) respectively suitable for cooperating with the first and second pairs (16, 18) of fingers (16A, 16B, 18A, 18B),
**characterized in that** the first recesses (20A, 20B) of the structural element (14) each comprise, vertically towards the top, an opening (24) intended to allow for the vertical insertion into each first recess (20) of the corresponding attachment finger (16A, 16B) of the first pair (16), the fingers (16A, 16B) of the first pair (16) of the exchanger (12) cooperating with the first recesses (20A, 20B) of the structural element (14) to form an articulation via which the heat exchanger (12) can pivot about a transversal pivoting axis (X) to be brought into a final vertical position in which each of the fingers (18A, 18B) of the second pair (18) is introduced longitudinally from front to back into the associated second recess (22A, 22B) of the structural element (14) provided for this purpose with a front longitudinal opening (26),
and **in that** the heat exchanger (12) is immobilized, at least longitudinally, relative to the structural element (14) via locking means (28) which are capable of blocking at least one of the fingers (18A, 18B) of the second pair (18) in the associated recess (22A, 22B), so as to lock the heat exchanger (12) in the final vertical position corresponding to its position of use.

2. Front end module according to Claim 1, **characterized in that**, in the final position of use, the heat exchanger (12) is suspended by the fingers (16A, 16B) of the first pair (16) which cooperate with the associated first recesses (20A, 20B), and is immobilized vertically by the fingers (18A, 18B) of the second pair (18) introduced into the associated second recesses (22A, 22B).

3. Front end module according to Claim 2, **characterized in that** the locking means (28) consist of at least one flange (30) which is capable of sealing the opening (26) of at least one of the second recesses (22A, 22B) in order to longitudinally immobilize the associated finger (18A, 18B) in the second recess (22A, 22B) and lock the heat exchanger (12) in the final position of use.

4. Front end module according to Claim 3, **characterized in that** the flange (30) is mounted on the structural element (14) by an articulated link (32) arranged at a first (34) of its ends.

5. Front end module according to Claim 3 or 4, **characterized in that** the flange (30) includes at least a staged first end (34) which is formed by a planar end part (36) which connects via a bent portion (38) to a central part (40) and **in that** at least the planar end part (36) is capable of being introduced, longitudinally from front to back, into a complementary slot (42) of the structural element (14) so that at least the bent portion (38) cooperates with the slot (42) to form an articulated link (32).

6. Front end module according to Claim 5, **characterized in that** the flange (30) is able to pivot about a transversal axis (X') between at least one horizontal initial position, that it occupies after the engagement of its first end (34), called articulation end, through the slot (42), and a final locking position in which the flange (30) extending overall vertically is able to prevent the finger (16A, 16B; 18A, 18B) from leaving the recess (20A, 20B; 22A, 22B) via the front longitudinal opening (26).

7. Front end module according to Claim 6, **characterized in that** at least one second end (44) of the flange (30) is able to be securely fastened to the structural element (14) so as to immobilize the flange (30) in its final locking position.

8. Front end module according to Claim 7, **characterized in that** the second end (44), called fastening end, of the flange (30) is fastened to the structural element (14) by screw-fastening using at least one fastening screw (46).

9. Front end module according to one of Claims 7 and 8, **characterized in that** the first staged articulation end (34) of the flange (30) is able to cooperate with the slot (42) so that the flange (30) is temporarily immobilized in a waiting position in which the flange (30) extends orthogonally to the structural element (14) and to the heat exchanger (12), and is so immobilized before being folded back to its final locking position in which the flange (30) extending overall vertically seals the associated recess (20A, 20B; 22A, 22B) comprising the finger (16A, 16B; 18A, 18B).

10. Front end module according to any one of the preceding claims, **characterized in that** the locking means (28), such as at least one flange (30), are premounted on the structural element (14) in a captive manner.

## Patentansprüche

1. Kraftfahrzeug-Frontendmodul, das ein senkrechtes Strukturelement (14) und einen Wärmetauscher (12) aufweist, wobei der Wärmetauscher (12) Einrichtungen für seine Befestigung am Strukturelement (14) aufweist, die aus einem ersten Paar (16) von Fingern (16A, 16B) bzw. einem zweiten Paar (18) von Fingern (18A, 18B) bestehen, und das Strukturelement (14) mindestens erste Aufnahmen (20, 20A, 20B) bzw. zweite Aufnahmen (22, 22A, 22B) aufweist, die fähig sind, mit dem ersten und zweiten Paar (16, 18) von Fingern (16A, 16B, 18A, 18B) zusammenzuwirken,
**dadurch gekennzeichnet, dass** die ersten Aufnahmen (20A, 20B) des Strukturelements (14) jeweils senkrecht nach oben eine Öffnung (24) aufweisen, die dazu bestimmt ist, die senkrechte Einführung des entsprechenden Befestigungsfingers (16A, 16B) des ersten Paars (16) in jede erste Aufnahme (20) zu erlauben, wobei die Finger (16A, 16B) des ersten Paars (16) des Tauschers (12) mit den ersten Aufnahmen (20A, 20B) des Strukturelements (14) zusammenwirken, um ein Gelenk zu formen, mittels dessen der Wärmetauscher (12) um eine Querschwenkachse (X) schwenken kann, um in eine senkrechte Endstellung zu kommen, in der jeder der Finger (18A, 18B) des zweiten Paars (18) längs von vorne nach hinten in die zugeordnete zweite Aufnahme (22A, 22B) des Strukturelements (14) eingeführt wird, die zu diesem Zweck mit einer vorderen Längsöffnung (26) versehen ist,
und dass der Wärmetauscher (12) zumindest in Längsrichtung bezüglich des Strukturelements (14) mit Hilfe von Verriegelungseinrichtungen (28) fixiert wird, die in der Lage sind, mindestens einen der Finger (18A, 18B) des zweiten Paars (18) in der zugeordneten Aufnahme (22A, 22B) zu blockieren, um den Wärmetauscher (12) in der senkrechten Endstellung zu verriegeln, die seiner Nutzungsstellung entspricht.

2. Frontendmodul nach Anspruch 1, **dadurch gekennzeichnet, dass** der Wärmetauscher (12) in der Endnutzungsstellung an den Fingern (16A, 16B) des ersten Paars (16) hängt, die mit den zugeordneten ersten Aufnahmen (20A, 20B) zusammenwirken, und senkrecht von den Fingern (18A, 18B) des zweiten Paars (18) fixiert wird, die in die zugeordneten zweiten Aufnahmen (22A, 22B) eingeführt sind.

3. Frontendmodul nach Anspruch 2, **dadurch gekennzeichnet, dass** die Verriegelungseinrichtungen (28) aus mindestens einem Flansch (30) bestehen, der die Öffnung (26) mindestens einer der zweiten Aufnahmen (22A, 22B) schließen kann, um den zugeordneten Finger (18A, 18B) in der zweiten Aufnahme (22A, 22B) in Längsrichtung zu fixieren und den Wärmetauscher (12) in der Endnutzungsstellung zu verriegeln.

4. Frontendmodul nach Anspruch 3, **dadurch gekennzeichnet, dass** der Flansch (30) durch eine Gelenkverbindung (32) auf das Strukturelement (14) montiert wird, die an einem ersten (34) seiner Enden ausgebildet ist.

5. Frontendmodul nach Anspruch 3 oder 4, **dadurch gekennzeichnet, dass** der Flansch (30) mindestens ein erstes gestuftes Ende (34) aufweist, das von einem ebenen Endbereich (36) geformt wird, der über einen abgewinkelten Teil (38) an einen zentralen Bereich (40) anschließt, und dass mindestens der ebene Endbereich (36) in Längsrichtung von vorne nach hinten in einen komplementären Schlitz (42) des Strukturelements (14) eingeführt werden kann, so dass mindestens der abgewinkelte Teil (38) mit dem Schlitz (42) zusammenwirkt, um eine Gelenkverbindung (32) zu bilden.

6. Frontendmodul nach Anspruch 5, **dadurch gekennzeichnet, dass** der Flansch (30) um eine Querachse (X') zwischen mindestens einer waagrechten Anfangsstellung, die er nach dem Einführen seines ersten so genannten Gelenkendes (34) durch den Schlitz (42) einnimmt, und einer Endverriegelungsstellung schwenken kann, in der der sich global senkrecht erstreckende Flansch (30) den Finger (16A, 16B, 18A, 18B) daran hindern kann, durch die vordere Längsöffnung (26) aus der Aufnahme (20A, 20B; 22A, 22B) auszutreten.

7. Frontendmodul nach Anspruch 6, **dadurch gekennzeichnet, dass** mindestens ein zweites Ende (44) des Flanschs (30) fest mit dem Strukturelement (14) verbunden werden kann, um den Flansch (30) in seiner Endverriegelungsstellung zu fixieren.

8. Frontendmodul nach Anspruch 7, **dadurch gekennzeichnet, dass** das zweite so genannte Befestigungsende (44) des Flanschs (30) am Strukturelement (14) durch Schraubverbindung mittels mindestens einer Befestigungsschraube (46) befestigt wird.

9. Frontendmodul nach einem der Ansprüche 7 oder 8, **dadurch gekennzeichnet, dass** das erste gestufte Gelenkende (34) des Flanschs (30) mit dem Schlitz (42) so zusammenwirken kann, dass der Flansch (30) vorübergehend in einer Wartestellung fixiert wird, in der der Flansch (30) sich orthogonal zum Strukturelement (14) und zum Wärmetauscher (12) erstreckt, und dies, ehe er in seine Endverriegelungsstellung umgeklappt wird, in der der sich global senkrecht erstreckende Flansch (30) die zugeordnete Aufnahme (20A, 20B, 22A, 22B) schließt, die den Finger (16A, 16B, 18A, 18B) enthält.

10. Frontendmodul nach einem der vorhergehenden Ansprüche, **dadurch gekennzeichnet, dass** die Verriegelungseinrichtungen (28) wie zumindest ein Flansch (30) unverlierbar auf das Strukturelement (14) vormontiert sind.
